# EUROPEAN PATENT APPLICATION

(11) **EP 2 333 869 A1**
(43) Date of publication of application: **15.06.2011**
(21) Application number: 10194759.6
(22) Date of filing: 13.12.2010
(51) Int. Cl.: H01M 2/04, H01M 2/06, H01M 2/08, H01M 10/052, H01M 10/058, H01M 2/02

(54) **Lithium secondary battery**

(30) Priority: 11.12.2009 KR 20090123107
(71) Applicant: Samsung SDI Co., Ltd., Yongin-si, Gyeonggi-do (KR)
(72) Inventor: Ahn, Chang-Bum, Cheonan-si, Chungcheongnam-do (KR)
(74) Representative: Salou, Clarisse

(57) **Abstract**

A lithium secondary battery capable of protecting an electrode assembly (10) against external shock includes a first case (22), a second case (24) separated from the first case and positioned to face the first case, and an electrode assembly (10) accommodated between the first case and the second case. The first case (22) and the second case (24) are adhered to each other by an adhesive.

## Description

### CROSS-REFERENCE TO RELATED APPLICATION

This application claims the benefit of Korean Patent Application No. 10-2009-0123107, filed December 11, 2009 in the Korean Intellectual Property Office, the disclosure of which is incorporated herein by reference.

### BACKGROUND

### 1. Field

An embodiment of the present invention relates to a lithium secondary battery, and more particularly, to a lithium secondary battery capable of protecting an electrode assembly from external shock.

### 2. Description of the Related Art

Portable wireless apparatus products such as a video camera, a portable telephone notebook computer, and a portable personal digital assistant (PDA) are made light and have high performance. The importance of a secondary battery used as the driving power source of the product is therefore increasing. Since the secondary battery may be repeatedly used while being repeatedly charged and discharged, the secondary battery is economical in comparison with a disposable battery.

In general, the secondary battery is formed of a metal can. One surface of a cylindrical or rectangular can commonly has an opening and an electrode assembly, and an electrolyte is injected into the can through the opening. Then, the can is sealed up by a cap assembly having the size and shape corresponding to the opening so that a sealed bare cell is formed. However, when the secondary battery is formed using the can, manufacturing processes are complicated.

For example, when the can is used, a process of inserting the electrode assembly and a welding process for coupling parts to each other are performed. Therefore, manufacturing cost and time increase. In addition, when the can is used, in order to expose an electrode tab to the outside, a plurality of parts (such as a cap plate) is additionally necessary. Furthermore, when the can is used, the can may be exploded due to the rise of the temperature in the can.

Also, a non-aqueous electrolyte is used for the lithium secondary battery due to the reaction between lithium and moisture. The electrolyte may be solid polymer that contains lithium salt. The lithium salt may be liquid disassociated from an organic solvent or a liquid electrolyte may be impregnated with a separator. Since the solid polymer electrolyte that functions as the separator or the electrolyte impregnated with the separator may leak, a pouch may be used as the case of the electrode assembly and the electrolyte.

The pouch case is lighter and less bulky than the can mainly, which is made of a metal. Further, the pouch case has flexibility in the shape of the battery or a method of installing the pouch case in an apparatus. However, since the pouch case is formed to be very thin, there are limitations on protecting the electrode assembly accommodated in the pouch case against external shock. Actually, a hole is easily generated in the pouch case due to the external shock. In addition, the electrode assembly in the pouch case may be damaged due to a swelling phenomenon in which a gas is generated in the battery in accordance with the initial charge and discharge of the battery. That is, when the gas is generated in the electrode plates of the electrode assembly, the electrode plates swell in both directions of the pouch case so that the volume increases. Therefore, a short is generated at the edges of a positive electrode plate and a negative electrode plate.

### SUMMARY

Accordingly, aspects of the present invention provide a secondary battery capable of protecting an electrode assembly against external shock.

Aspects of the present invention provide a lithium secondary battery, including a first case, a second case different from the first case and positioned to face the first case, and an electrode assembly accommodated between the first case and the second case.

According to aspects of the invention, the first case and the second case are adhered to each other by an adhesive (e.g., by thermal adhesion or by a thermal adhesion adhesive).

According to aspects of the invention, the first case and the second case comprise a metal, and preferably are made of a metal.

According to aspects of the invention, the adhesive has a melting point ranging from 120°C to 200°C.

According to aspects of the invention, the adhesive is a polymer material.

According to aspects of the invention, the adhesive is chosen among polyethylene (PE), polypropylene (PP), and casting polypropylene (CPP).

According to aspects of the invention, at least one side of the first case includes a first protrusion extended toward the second case and a first step difference positioned on an external side of the first protrusion.

According to aspects of the invention, at least one side of the second case includes a second protrusion extended toward the first case and settled in the first step difference and a second step difference positioned on the internal side of the second protrusion so that the first protrusion may be settled.

According to aspects of the invention, the first case is inserted into an internal space of the second case in a process of coupling the first case and the second case to each other.

According to aspects of the invention, at least one side of the first case includes a first protrusion extended toward the second case and a second protrusion from the end of the first protrusion. This second protusion is generally extended to run parallel to the side of the first case from which the first protusion is extended.

According to aspects of the invention, the second protrusion is settled in the first case so that the first case is coupled to the second case.

According to aspects of the invention, at least one side of the first case includes a first protrusion extended toward the second case and a second protrusion positioned to be separated from the first protrusion by a predetermined distance.

According to aspects of the invention, at least one side of the second case includes a third protrusion positioned to be inserted into a space between the first protrusion and the second protrusion.

A lithium secondary battery according to an embodiment of the present invention includes a housing including a first case and a second case positioned to face the first case and an electrode assembly within the housing, wherein the first case is coupled to the second case.

In one embodiment of the lithium secondary battery, an adhesive (e.g., a thermal adhesion adhesive) adheres the first case to the second case (e.g., by thermal adhesion).

In one embodiment of the lithium secondary battery, an adhesive is positioned on at lease one side of the first case and at least one side of the second case, said sides facing each other. In one embodiment of the lithium secondary battery, the first case and the second case include a metal, and preferably are made of a metal In one embodiment of the lithium secondary battery, the adhesive has a melting point ranging from 120°C to 200°C (i.e. 120°C or 200°C or between 120°C and 200°C). In one embodiment of the lithium secondary battery, the adhesive is a polymer material, and preferably the adhesive is chosen among polyethylene (PE), polypropylene (PP), and casting polypropylene (CPP).
In one embodiment of the lithium secondary battery, the electrode assembly includes electrode tabs; the first case and the second case form at least one opening through which the corresponding electrode tabs extend; and the adhesive seals the openings around the electrode tabs and electrically insulates the electrode tabs from the first and second cases when electrode tabs are present, they are generally two tabs, one for each polarity.
In one embodiment of the lithium secondary battery, the seal between the first and second cases is configured to fail at a temperature of less than 200°C. This is generally due to the adhesive melting.
In one embodiment, the electrode assembly includes electrode tabs; and the first case and the second case form at least one opening through which the electrode tabs extend, the lithium secondary battery further including a plate coupled to and closing the opening, the plate having through holes through which the electrode tabs are exposed to the outside through the plate.

In one embodiment of the lithium secondary battery, the housing further includes a protrusion at which a first mating surface of the first case overlaps a second mating surface of the second case, and an adhesive is disposed between the first and second mating surfaces.
In one embodiment of the lithium secondary battery, the protrusion is a sidewall.
In one embodiment of the lithium secondary battery, the first case includes a first flat surface and a first wall extending from the first flat surface and having the first mating surface; and the second case includes a second flat surface and a second wall extending from the second flat surface and having the second mating surface which overlaps and faces the first mating surface.
In one embodiment of the lithium secondary battery, the first wall includes a first step portion which contacts an upper edge of the second wall; and the second wall includes a second step portion which contacts an upper edge of the first wall.
In one embodiment of the lithium secondary battery, the first mating surface extends from the first flat surface to an upper edge of the first wall; and the second mating surface extends from the second flat surface to an upper edge of the second wall. In one embodiment of the lithium secondary battery, the first case further includes a third wall forming a channel between the first and third walls, and the second wall is disposed in the channel.
In one embodiment of the lithium secondary battery, the third wall includes a third mating surface, the second wall includes a fourth mating surface facing the third mating surface; and the adhesive separates the third and fourth mating surfaces.
In one embodiment of the lithium secondary battery, the first case includes a first wall extending from an edge of the first case, and a protruding portion having the first mating surface extending substantially perpendicular to the first wall; and the second mating surface overlaps and faces the first mating surface.

In one embodiment of the lithium secondary battery, at least one side of the first case includes a first wall extended toward the second case and a first step difference positioned on an external side of the first wall, and at least one side of the second case includes a second wall extended toward the first case and settled in the first step difference and a second step difference positioned on an internal side of the second wall so that the first wall is settled in the second step difference.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a view illustrating schematically a lithium secondary battery according to an embodiment of the present invention;
FIG. 2 is a view illustrating schematically an embodiment of a method of coupling the first case and the second case to each other;
FIG. 3 is a view illustrating schematically an embodiment of a method of coupling the first case and the second case to each other;
FIG. 4 is a view illustrating schematically an embodiment of a method of coupling the first case and the second case to each other;
FIG. 5 is a view illustrating schematically an embodiment of a method of coupling the first case and the second case to each other;
FIGs. 6A and 6B are views illustrating schematically processes of coupling a housing and an electrode tab to each other; and
FIG. 7 is a view illustrating schematically a lithium secondary battery according to an embodiment of the present invention.

### DETAILED DESCRIPTION

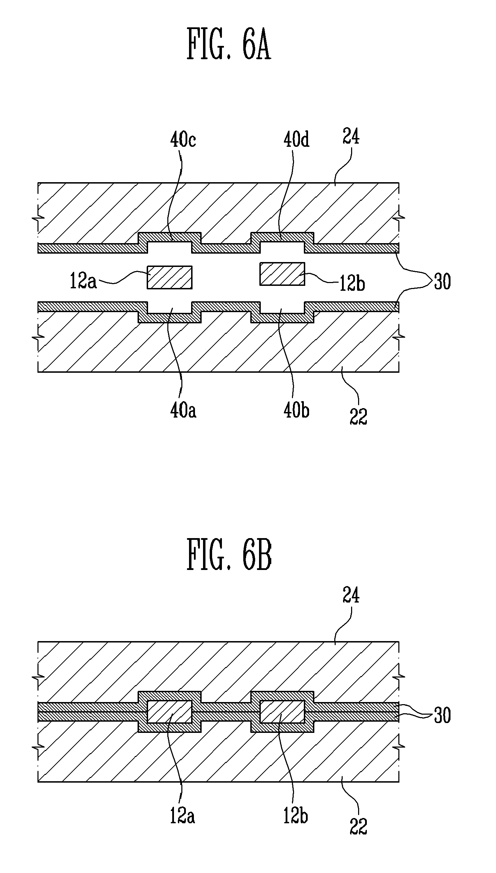

Reference will now be made in detail to the present embodiments of the present invention, examples of which are illustrated in the accompanying drawings, wherein like reference numerals refer to the like elements throughout. The embodiments are described below in order to explain the present invention by referring to the figures. In all the drawings except FIG. 6B, for convenience sake, the secondary battery is represented schematically before the coupling process, which leads to the coupling of the first case and the second case, this forming the housing.

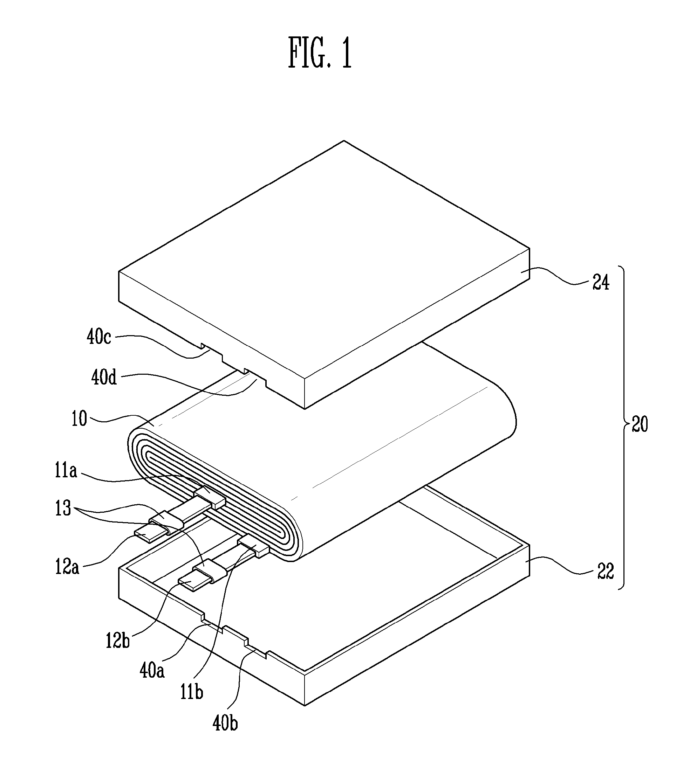

FIG. 1 is a view illustrating a lithium secondary battery according to an embodiment of the present invention. In FIG. 1, as an example, an electrode assembly 10 is obtained by winding a first electrode plate, a second electrode plate, and a separator interposed between the first electrode plate and the second electrode plate. However, the present invention is not limited to the above. For example, the electrode assembly 10 may be formed by laminating and/or stacking the first electrode plate, the separator, and the second electrode plate. Further, the lithium secondary battery may utilize a liquid electrolyte or a solid electrolyte. The solid electrolyte can comprise a solid polymer that contains lithium salt or a liquid electrolyte impregnated in the separator.

Referring to FIG. 1, the lithium secondary battery includes the electrode assembly 10 for generating predetermined current and a housing 20 in which the electrode assembly 10 is accommodated. A first electrode tab 12a is coupled to the first electrode plate to protrude above the upper end of the electrode assembly 10 (i.e., toward a groove 40a). A second electrode tab 12b is coupled to the second electrode plate to protrude above the upper end of the electrode assembly 10 (i.e., toward a groove 40b). In the electrode assembly 10, the first electrode tab 12a and the second electrode tab 12b are separated from each other by a predetermined distance to be electrically insulated from each other.

Lamination tapes 11 a and 11 b are wound in the parts where the first electrode tab 12a and the second electrode tab 12b extend from the electrode assembly 10. The lamination tapes 11 a and 11 b block the heat generated by the first electrode tab 12a and the second electrode tab 12b and prevent the electrode assembly 10 from being pressed by the edge of the first electrode tab 12a or the second electrode tab 12b.

The first electrode tab 12a and the second electrode tab 12b are exposed to the outside while being coupled to the housing 20. Therefore, an insulating tape 13 is adhered to the parts where the first electrode tab 12a and the second electrode tab 12b contact the housing 20. Here, since the housing 20 and the first and second electrode tabs 12a and 12b are adhered to each other by an adhesive (that is, an insulating material), the insulating tape 13 may be omitted, which will be described in detail later.

The housing 20 includes a first case 22 positioned under the electrode assembly 10 and a second case 24 positioned on the electrode assembly 10. Under and on (i.e. above) are referring to the disposal in the drawings, in which the secondary battery is represented. The first case 22 and the second case 24 are made of a material having a predetermined strength, for example, a metal such as aluminum. The first case 22 and the second case 24 are adhered by the adhesive (not shown in FIG. 1) and protect the electrode assembly 10 accommodated therein.

The first case 22 includes the first groove 40a and the second groove 40b. In addition, the second case 24 includes a third groove 40c that faces the first groove 40a and a fourth groove 40d that faces the second groove 40b. The first through fourth grooves 40a, 40b, 40c, 40d form predetermined holes or openings (40a, 40c ; 40b, 40d) so that the first electrode tab 12a and the second electrode tab 12b may protrude to the outside of the housing 20 when the first case 22 and the second case 24 are coupled to each other.

According to the above described example of the present invention, the first case 22 and the second case 24 are coupled to form the housing 20. In this case, the process of inserting the electrode assembly 10 into the housing 20 is simplified to reduce the process time. In addition, since the first case 22 and the second case 24 are made of a metal and are solid like a can, the electrode assembly 10 is advantageously safely protected against external shock and the swelling phenomenon is minimized.

Furthermore, according to an aspect of the present invention, an adhesive is used having a melting point at a predetermined temperature. In this case, the first case 22 and the second case 24 form cracks at the seal at said predetermined temperature to correspond to the rise of the temperature in the housing 20 to prevent an explosion from occurring.

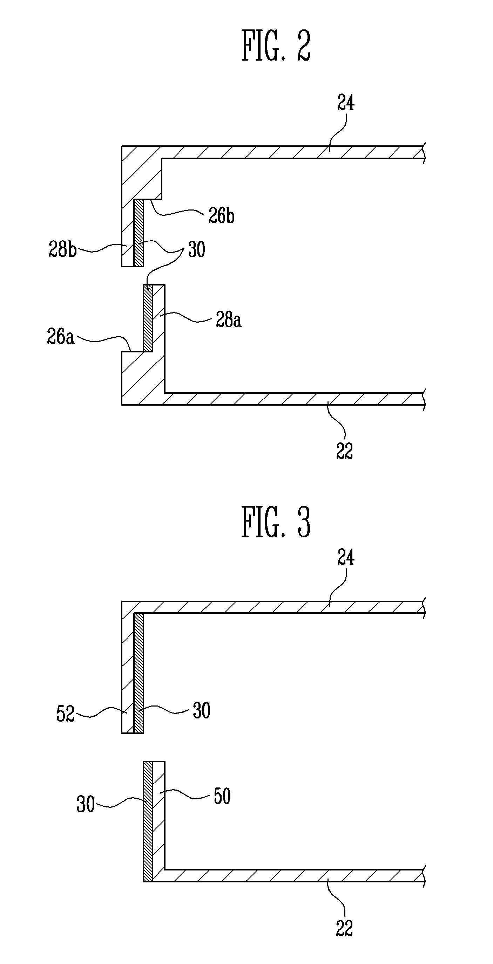

FIG. 2 is a view illustrating an embodiment of a method of coupling the first case 22 and the second case 24 to each other. In FIG. 2, for convenience sake, only one side of each of the first case and the second case will be illustrated. Referring to FIG. 2, the side of the first case 22 includes a first protrusion or protruding position 28a vertically extended from a bottom (that is, extended toward the second case 24). A first step difference 26a is positioned on the external side of the first protrusion 28a. The side of the second case 22 includes a second protrusion 28b extended toward the first case 22. A second step difference 26b is positioned on the internal side of the second protrusion 28b.

Here, when the first case 22 and the second case 24 are coupled to each other, the first protrusion 28a is settled in the second step difference 26b and the second protrusion 28b is settled in the first step difference 26a. In this way, the first case 22 and the second case 24 are coupled to each other with a predetermined strength.

The external side of the first protrusion 28a and the internal side of the second protrusion 28b are coated with an adhesive 30. The adhesive 30 is preferably made of a material having a melting point ranging from 120°C to 200°C and couples the first case 22 and the second case 24 to each other. However, it is possible according to the invention that other types of adhesives with other melting points can be used.

In the shown example, the adhesive 30 is made of a polymer material having a melting point between 120°C and 200°C. In detail, according to an embodiment of the present invention, the adhesive 30 is made of a material having a melting point no more than 200°C in order to prevent an explosion from occurring when the temperature in the housing 20 rises. In addition, according to an embodiment of the present invention, the adhesive 30 is made of a material having a melting point no less than 120°C so that the adhesive force of the first case 22 and the second case 24 may be stably maintained in a common use environment. For example, according to aspects of the present invention, the adhesive 30 may be made of a material chosen among polyethylene (PE), polypropylene (PP), and casting polypropylene (CPP).

According to an aspect of the present invention, a radio frequency induction heating method is used to couple the first and second sides 22, 24. The radio frequency induction heating method locally heats only the adhesive 30 to couple the first case 22 and the second 24 to each other. In this case, the amount of heat transmitted to the electrode assembly 10 is minimized so that it is possible to prevent the electrode assembly 10 from being damaged. In addition, according to aspects of the present invention, the adhesive 30 is heated by a thermal binding method to couple the first case 22 and the second case 24 to each other.

FIG. 3 is a view illustrating an embodiment of a method of coupling the first case 22 and the second case 24 to each other. In FIG. 3, for convenience sake, only one side of each of the first case 22 and the second case 24 will be illustrated. Referring to FIG. 3, the sides 50 respectively 52 of the first case 22 respectively the second case 24 are formed to vertically (as shown in the figure) protrude from corresponding bottoms of the cases 22, 24. That is, the sides 50 and 52 of the first case 22 and the second case 24 are formed to have a predetermined space so that the electrode assembly 10 may inserted.

In the coupling process, the first case 22 is inserted into the second case 24. Therefore, the adhesive 30 is coated on the outside of the side 50 of the first case 22 and the inside of the side 52 of the second case 24. Therefore, the first case 22 is coupled to the second case 24 by the adhesive 30. Since the characteristics and materials of the adhesive 30 were described with reference to FIG. 2, detailed description thereof will be omitted.

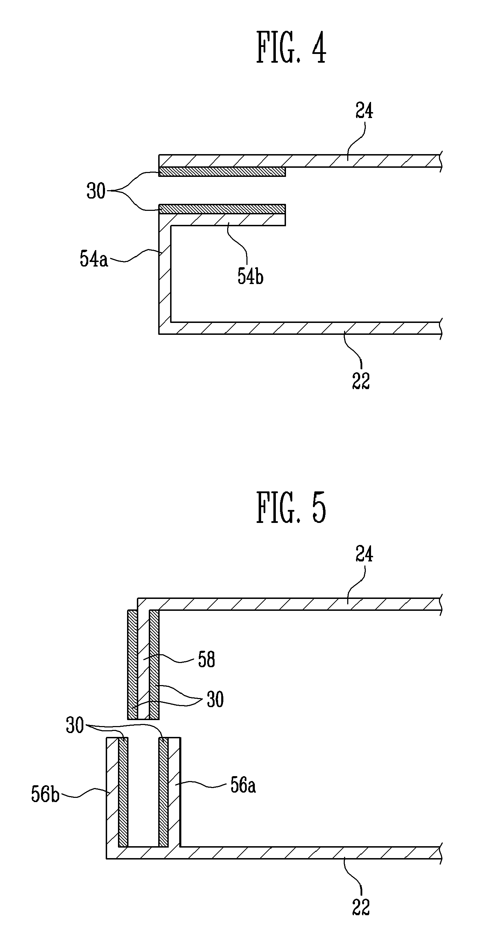

FIG. 4 is a view illustrating an embodiment of a method of coupling the first case 22 and the second case 24 to each other. In FIG. 4, for convenience sake, only one side of each of the first case 22 and the second case 24 will be illustrated. Referring to FIG. 4, the side of the first case 22 includes a first protrusion 54a extended toward the second case 24, and a second protrusion 54b extended from the end of the first protrusion 54a to the inside of the first case 22, and generally parallel to the bottom of the first case 22. The height of the first protrusion 54a positioned is determined so that an internal space into which the electrode assembly 10 may be inserted is formed.

The second protrusion 54b extends from the end of the first protrusion 54a to the inside of the first case 22 and is formed in a direction parallel to the second case 24 so that the second case 24 may be settled on the second protrusion 54b. The second protrusion 54b is coated with the adhesive 30. In the second case 24, the part adhered to the second protrusion 54b is coated with the adhesive 30.

In the coupling process, the second case 24 is settled on the second protrusion 54b and is coupled to the second protrusion 54b by the adhesive 30. Since the characteristics and materials of the adhesive 30 were described with reference to FIG. 2, detailed description thereof will be omitted.

FIG. 5 is a view illustrating an embodiment of a method of coupling the first case 22 and the second case 24 to each other. In FIG. 5, for convenience sake, only one side of each of the first case 22 and the second case 24 will be illustrated. Referring to FIG. 5, the side (or a third protrusion 58) of the second case 24 is extended toward the first case 22.

The first case 24 includes a first protrusion 56a and a second protrusion 56b positioned on side and extended toward the second case 24. Here, the first protrusion 56a and the second protrusion 56b are parallel and separated from each other by a predetermined distance so that the third protrusion 58 may be inserted therebetween.

In the coupling process, the third protrusion 58 is inserted into the space between the first and second protrusions 56a and 56b and is coupled by the adhesive 30. Since the characteristics and materials of the adhesive 30 were described with reference to FIG. 2, detailed description will be omitted.

While the adhesive 30 is described in the embodiments of FIGs. 2 to 5 as being coated on both the first case 22 and the second case 24, the present invention is not limited to the above. For example, the adhesive 30 may be coated on one side of only one the first case 22 or the second case 24.

In FIGs. 2 to 5, only one side of each of the first case 22 and the second case 24 was illustrated. However, the remaining three sides excluding the side on which the electrode tabs 12a and 12b are exposed have the same structure illustrated in FIGs. 2 to 5 so that the first case 22 and the second case 24 may be stably coupled to each other.

FIGs. 6A and 6B are views illustrating processes of coupling a housing 20 and an electrode tab 12a, 12b to each other. Referring to FIGs. 6A and 6B, in the coupling process, the first groove 40a and the second groove 40b positioned in the first case 22 face the third groove 40c and the fourth groove 40d positioned in the second case 24. The first electrode tab 12a is positioned between the first groove 40a and the third groove 40c. The second electrode tab 12b is positioned between the second groove 40b and the fourth groove 40d. Then, the first case 22 and the second case 24 are coupled to each other by the adhesive 30. At this time, the adhesive 30 is positioned to wrap the insulating tape 13 to fix the electrode tabs 12a and 12b to the housing 20. According to aspects of the present invention, the electrode tabs 12a and 12b are fixed to the housing 20 by the adhesive 30 in the coupling process. Therefore, the manufacturing processes may be simplified and the manufacturing cost may be reduced.

Since the adhesive 30 is made of an insulating material, the insulating tape 13 shown in FIG. 1 may be omitted from the electrode tabs 12a and 12b.

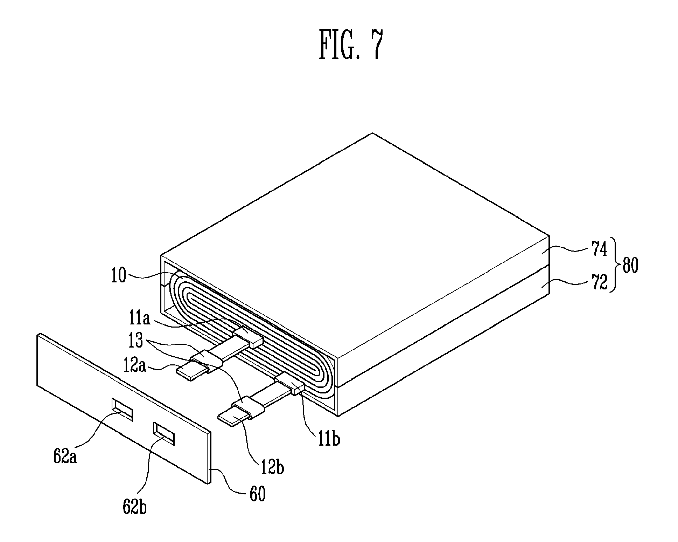

FIG. 7 is a view illustrating a lithium secondary battery according to an embodiment of the present invention. In FIG. 7, the same elements as those of FIG. 1 are denoted by the same reference numerals and detailed description thereof will be omitted. Referring to FIG. 7, the lithium secondary battery includes an electrode assembly 10 and a housing 80 in which the electrode assembly 10 is accommodated. The lithium secondary battery includes a plate 60 positioned on one side of the housing 80 which is coupled to the housing 80.

The housing 80 includes a first case 72 positioned under the electrode assembly 10 and a second case 74 positioned above the electrode assembly 10. The first case 72 and the second case 74 are adhered to each other by an adhesive (not shown) and protects the electrode assembly 10 accommodated in the space between the first case 72 and the second case 74.

Here, the housing 80 is coupled in the state where one side is opened so that the electrode tabs 12a and 12b of the electrode assembly 10 may be exposed. The first case 72 and the second case 74 are coupled to each other by the method illustrated in FIGs. 2 to 5 to form the housing 80.

The plate 60 includes a first through hole 62a and a second through hole 62b. The first through hole 62a is formed so that the first electrode tab 12a passes through the first through hole 62a when the plate 60 is coupled to the housing 80. The second through hole 62b is formed so that the second electrode tab 12b passes through the second through hole 62b when the plate 60 is coupled to the housing 80. Here, the plate 60 is coupled to the housing 80 by laser welding. However, the invention is not limited thereto.

According to the lithium secondary battery of aspects of the present invention, since the first case and the second case are coupled to each other so that housing is formed, the manufacturing time may be reduced. In addition, according to aspects of the present invention, since the first case and the second case are made of a metal according to the present invention, the electrode assembly may be safely protected and a swelling phenomenon may be minimized. Furthermore, according to aspects of the present invention, since the first case and the second case are coupled to each other by an adhesive having a predetermined melting point, it is possible to minimize the possibility of explosion.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A lithium secondary battery, comprising:
a housing (20) comprising a first case (22) and a second case (24) positioned to face the first case (22);
an electrode assembly (10) within the housing (20) ; and
wherein the first case (22) is coupled to the second case (24).

2. The lithium secondary battery according to claim 1, wherein the first case (22) and the second case (24) comprise a metal.

3. The lithium secondary battery according to anyone of claims 1 and 2, wherein an adhesive (30) is positioned on at least one side of the first case (22) and on at least one side of the second case (24), said sides facing each other.

4. The lithium secondary battery according to claim 3, wherein the adhesive has a melting point ranging from 120°C to 200°C..

5. The lithium secondary battery according to anyone of claims 3 and 4, wherein the adhesive is a polymer material, and preferably the adhesive is chosen among polyethylene (PE), polypropylene (PP), and casting polypropylene (CPP).

6. The lithium secondary battery according to any one of claim 3 to 5, wherein:
the electrode assembly comprises electrode tabs (12a, 12b);
the first case (22) and the second case (24) form at least one opening (40a, 40c ; 40b, 40d) through which the corresponding electrode tabs (12a, 12b) extend; and
the adhesive (30) seals the openings (40a, 40c ; 40b, 40d) around the electrode tabs (12a, 12b) and electrically insulates the electrode tabs (12a, 12b) from the first and second cases (24).

7. The lithium secondary battery according to the preceding claim, wherein the seal between the first and second cases (22, 24) is configured to fail at a temperature of less than 200°C.

8. The lithium secondary battery according to any one of claims 3 to 7, wherein:
the electrode assembly (10) comprises electrode tabs (12a, 12b); and
the first case (72) and the second case (74) form at least one opening through which the electrode tabs (12a, 12b) extend, the lithium secondary battery further comprising a plate (60) coupled to and closing the opening, the plate (60) having through holes (62a, 62b) through which the electrode tabs (12a, 12b) are exposed to the outside through the plate (60).

9. The lithium secondary battery according to any one of claims 1 and 2, wherein:
the housing (20) further comprises a protrusion (28a, 28b ; 50, 52 ; 54a, 54b ; 56b, 58, 56a) which is preferably a sidewall at which a first mating surface (28a ; 50 ; 54b ; 56a, 56b) of the first case (22) overlaps a second mating surface (28b ; 52 ; 54b ; 58) of the second case (24), and
an adhesive (30) is disposed between the first and second mating surfaces (28a, 28b ; 52, 50 ; 54b, 54a ; 56b, 58, 56a).

10. The lithium secondary battery according to the preceding claim, wherein:
the first case (22) comprises a first flat surface and a first wall (28a ; 50 ; 56b) extending from the first flat surface and having the first mating surface; and
the second case (24) comprises a second flat surface and a second wall (28b ; 52 ; 58) extending from the second flat surface and having the second mating surface which overlaps and faces the first mating surface.

11. The lithium secondary battery according to the preceding claim, wherein:
the first wall comprises a first step portion which contacts an upper edge of the second wall; and
the second wall comprises a second step portion which contacts an upper edge of the first wall.

12. The lithium secondary battery according to claim 10 , wherein:
the first mating surface extends from the first flat surface to an upper edge of the first wall; and
the second mating surface extends from the second flat surface to an upper edge of the second wall.

13. The lithium secondary battery according to any one of claims 10 to 12, wherein:
the first case (22) further comprises a third wall (56a) forming a channel between the first (56b) and third wall (56a), and
the second wall (58) is disposed in the channel.

14. The lithium secondary battery according to the preceding claim, wherein:
the third wall (56a) comprises a third mating surface,
the second wall (58) comprises a fourth mating surface facing the third mating surface; and
the adhesive (30) separates the third and fourth mating surfaces.

15. The lithium secondary battery according to claim 9, wherein:
the first case (22) comprises a first wall (54a) extending from an edge of the first case (22), and a protruding portion (54b) having the first mating surface extending substantially perpendicular to the first wall (22); and
the second mating surface overlaps and faces the first mating surface.

16. The lithium secondary battery according to any one of claims 1 to 15, wherein:
at least one side of the first case (22) comprises a first wall (28a) extended toward the second case (24) and a first step difference (26a) positioned on an external side of the first wall (28a), and
at least one side of the second case (24) comprises a second wall (28b) extended toward the first case and settled in the first step difference and a second step difference (26b) positioned on an internal side of the second wall so that the first wall is settled in the second step difference (26b).
